# EUROPEAN PATENT APPLICATION

(11) **EP 4 723 294 A1**
(43) Date of publication of application: **08.04.2026**
(21) Application number: 24865867.6
(22) Date of filing: 12.09.2024
(51) Int. Cl.: H01M 10/42, H01M 10/635, H01M 10/613, H01M 10/6567, H01M 10/6563, H01M 10/48

(54) **BATTERY SYSTEM AND CONTROL METHOD USING SAME**

(30) Priority: 13.09.2023 KR 20230121730; 11.09.2024 KR 20240123690
(71) Applicant: LG Energy Solution, Ltd., Seoul 07335 (KR)
(72) Inventor: CHO, Jungsik, Daejeon 34122 (KR)
(74) Representative: Plasseraud IP
(86) International application number: PCT/KR2024/013886
(87) International publication number: WO 2025/058428

(57) **Abstract**

A battery system according to an embodiment of the present disclosure comprises: a battery cell that stores and supplies energy through charging and discharging, a sensing unit that collects status information of the battery cell, a cooling device that performs heat dissipation of the battery cell, and a BMS that controls the operation of the cooling device based on the status information collected from the sensing unit, wherein the cooling device includes a coolant for cooling the battery cell and a heat exchange unit for cooling the coolant, and wherein if it is determined that a fire has occurred in the battery cell, the heat exchange unit operates under a first condition or a second condition based on the status information.

## Description

### [TECHNICAL FIELD]

### Cross Citation with Related Application(s)

This application claims priority from and the benefit of Korean Patent Application No. 10-2023-0121730 filed on September 13, 2023 and Korean Patent Application No. 10-2024-0123690 filed on September 11, 2024 in the Korean Intellectual Property Office, the disclosures of which are incorporated herein by reference in their entirety.

The present disclosure relates to a battery system and a control method using the same, and more particularly, to a battery system that manages battery cell cooling or fire, and a control method using the same.

### [BACKGROUND]

As a secondary battery is attracted considerable attention as an energy source for power-driven devices, such as an electric bicycle, an electric vehicle, and a hybrid electric vehicle, as well as an energy source for mobile devices, such as a mobile phone, a digital camera, and a laptop computer, demand for the secondary battery is rapidly increasing.

Recently, battery packs have been widely used for driving or energy storage in medium and large-sized devices such as electric vehicles or energy storage systems. A conventional battery pack includes one or more battery modules and a control unit for controlling charging and discharging of the battery pack in a pack case. Here, the battery module is configured so as to include a plurality of battery cells in a module case. That is, in a conventional battery pack, a plurality of battery cells (secondary batteries) are housed in a module case to constitute each battery module, and one or more battery modules are housed in a pack case to constitute a battery pack.

On the other hand, typically, battery cells are densely housed in a battery module in a narrow space and generate a large amount of heat during the charging and discharging process, the battery cells may catch fire if the temperature rises excessively.

Therefore, a method for minimizing the temperature rise of the battery cells and effectively suppressing a fire in the event of a fire within the battery cells have been desired, and recently, methods for cooling the battery cells using liquid and suppressing battery cell fires has been studied from various angles.

### [DETAILED DESCRIPTION OF THE INVENTION]

### [Technical Problem]

The present disclosure is designed to solve the problems of the related art, and therefore, the present disclosure aims to effectively manage battery cell temperature rises and fires when they occur.

### [Technical Solution]

According to an embodiment of the present disclosure, there is provided a battery system comprising: a battery cell that stores and supplies energy through charging and discharging, a sensing unit that collects status information of the battery cell, a cooling device that performs heat dissipation of the battery cell, and a BMS that controls the operation of the cooling device based on the status information collected from the sensing unit, wherein the cooling device includes a coolant for cooling the battery cell and a heat exchange unit for cooling the coolant, and wherein if it is determined that a fire has occurred in the battery cell, the heat exchange unit operates under a first condition or a second condition based on the status information.

The sensing unit includes a temperature sensor, and the status information collected from the sensing unit includes a temperature value of the battery cell, wherein if the temperature value is higher than a first reference value, and is lower than a second reference value or equal to the second reference value, the heat exchange unit operates under a first condition, if the temperature value is higher than a second reference value, the heat exchange unit operates under a second condition, and the second reference value may be higher than the first reference value.

The heat exchange unit includes a coolant fan that adjusts the temperature of the coolant through rotation, the first condition is that the coolant fan is driven at a first speed, the second condition is that the coolant fan is driven at a second speed, and the second speed may be faster than the first speed.

If it is determined that a fire has occurred in the battery cell, the operation of the heat exchange unit may be stopped.

The coolant is circulated in a cooling pipe positioned adjacent to the battery cell, and if it is determined that a fire has occurred in the battery cell, the coolant may be discharged from the cooling pipe toward the battery cell.

If it is determined that a fire has occurred in the battery cell, the position information of the battery cell may be transmitted to an external control center.

The fire outbreak in the battery cell may be determined based on status information collected by the sensing unit, and the sensing unit may include at least one of a pressure sensor, an illuminance sensor, and a gas sensor.

The battery system includes a plurality of battery cells, the coolant is circulated in a cooling pipe positioned adjacent to the plurality of battery cells, the cooling pipe includes at least one valve unit that adjusts the moving path of the coolant flowing through the cooling pipe, and a coolant temperature sensor may be arranged inside each of the at least one valve unit.

The status information collected from the coolant temperature sensor includes temperature values of the plurality of battery cells, if the temperature values of the plurality of battery cells are lower than a third reference value, the cooling device is driven in a general cooling mode in which the coolant flowing through the cooling pipe cools the whole battery cell, and if there is a battery cell among the plurality of battery cells whose temperature value is higher than a third reference value, the cooling device may be driven in an intensive cooling mode in which the coolant flowing through the cooling pipe cools only the battery cell having a temperature value higher than the third reference value.

According to another embodiment of the present disclosure, there is provided a control method of a battery system comprising: a battery cell that stores and supplies energy through charging and discharging, a sensing unit that collects status information of the battery cell, a cooling device that performs heat dissipation of the battery cell, and a BMS that controls the operation of the cooling device based on the status information collected from the sensing unit, wherein the cooling device includes a coolant for cooling the battery cell and a heat exchange unit for cooling the coolant, the method comprising the steps of: determining outbreak of a fire by the BMS based on the status information collected from the sensing unit, and operating the heat exchange unit of the cooling device under a first condition or a second condition based on the status information collected from the sensing unit, if it is determined that no fire has occurred.

The status information collected from the sensing unit includes a temperature value of the battery cell, and the operating step comprises: comparing the temperature value collected from the sensing unit with a first reference value and a second reference value, and comparing the temperature value with the second reference value if the temperature value is higher than the first reference value, and operating the heat exchanger of the cooling device under a second condition if the temperature value is higher than the second reference value, and operating the heat exchanger of the cooling device under a first condition if it is not so, wherein the second reference value is higher than the first reference value.

The heat exchange unit includes a coolant fan that adjusts the temperature of the coolant through rotation, the first condition is that the coolant fan is driven at a first speed, the second condition is that the coolant fan is driven at a second speed, and the second speed may be faster than the first speed.

The control method may further comprise stopping the heat exchanger of the cooling device if it is determined that a fire has occurred.

The coolant is circulated in a cooling pipe positioned adjacent to the battery cell, and the method may further comprise discharging the coolant from the cooling pipe if it is determined that a fire has occurred.

The control method may further comprise transmitting the position information of the battery cell to an external control center by the BMS if it is determined that a fire has occurred.

The outbreak of a fire is determined based on the status information collected by the sensing unit, and the status information may include at least one of a pressure value around the battery cell, an illuminance value, and the occurrence of a hot gas according to the air composition.

The outbreak of a fire may be determined based on the occurrence of a hot gas.

The outbreak of a fire may be determined based on the illuminance value and the occurrence of a hot gas.

The status information further comprises a temperature value of the battery cell, and the outbreak of a fire may be determined based on the temperature value and the pressure value.

### [Advantageous Effects]

According to an aspect of the present disclosure, a coolant can be cooled based on the temperature value of a battery cell, thereby minimizing the temperature rise of the battery cell.

Also, in the case of outbreak of fire in a battery cell, the coolant is supplied to the inside of a battery pack, and the outbreak of a fire is notified to the outside, thereby making it possible to quickly suppressing the battery fire.

In addition, the present disclosure may have various other effects, and these will be described in each embodiment, or the description of the effects that can be easily inferred by a person skilled in the art will be omitted.

### [BRIEF DESCRIPTION OF THE DRAWINGS]

FIG. 1 is a block diagram of a battery system according to an embodiment of the present disclosure.
FIG. 2 is a diagram showing a part of a battery system according to an embodiment of the present disclosure.
FIG. 3 is a flowchart showing a cooling control method of a battery system according to an embodiment of the present disclosure.
FIG. 4 is a diagram embodying a part of a battery system according to another embodiment of the present disclosure, which is a diagram showing a cooling device driven in a general cooling mode.
FIGS. 5 and 6 are diagrams showing a cooling device driven in an intensive cooling mode in the battery system according to FIG. 4.
FIG. 7 is a flowchart showing a cooling control method driven in a general cooling mode or an intensive cooling mode in the battery system according to FIGS. 4 to 7.
FIG. 8 is a flowchart showing a fire control method of a battery system according to an embodiment of the present disclosure.
FIG. 9 is a flowchart showing a method for determining the outbreak of a fire in a battery system according to an embodiment of the present disclosure.
FIG. 10 is another flowchart showing a method for determining the outbreak of a fire in a battery system according to an embodiment of the present disclosure.

### [DETAILED DESCRIPTION OF THE EMBODIMENTS]

Hereinafter, preferred embodiments of the present disclosure will be described in detail with reference to the accompanying drawings. The terms used in the specification and the appended claims should not be construed as limited to general and dictionary meanings, but construed as meanings and conception coinciding the technical aspects of the present disclosure on the basis of the principle that the inventors can appropriately define the concept of the terms to explain the invention in the optimum method. Therefore, embodiments described in the specification and the configurations shown in the drawings are not more than the most exemplary embodiments of the present disclosure and do not fully cover the spirit of the present disclosure. Accordingly, it should be understood that there may be various equivalents and modifications that can replace those when this application is filed.

In the drawings, the dimension of each of components or a specific portion constituting the component is exaggerated, omitted, or schematically illustrated for convenience in description and clarity. Thus, the dimension of each element does not entirely reflect an actual size. Moreover, detailed descriptions related to well-known functions or configurations will be omitted in order not to unnecessarily obscure subject matters of the present disclosure. Furthermore, since like reference numerals refer to like elements through, overlapping or repeated descriptions thereof will be omitted in various embodiments.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, a battery system according to an embodiment of the present disclosure will be described.

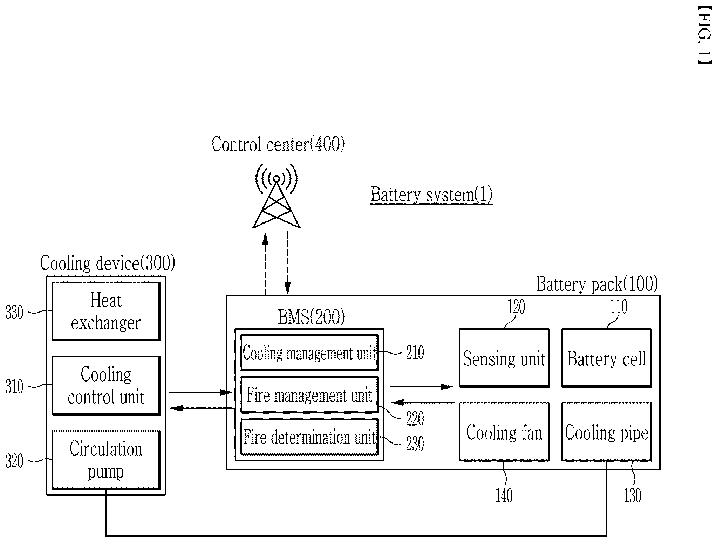

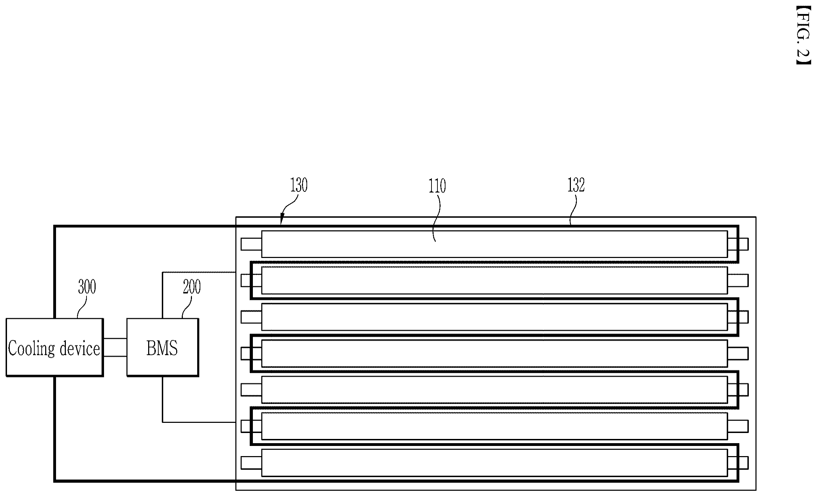

FIG. 1 is a block diagram of a battery system according to an embodiment of the present disclosure. FIG. 2 is a diagram showing a part of a battery system according to an embodiment of the present disclosure.

Referring to FIGS. 1 and 2, the battery system 1 of the present embodiment may include a battery pack 100 containing at least one battery cell 110, a BMS 200 that manages the status of the battery cell 110, and a cooling device 300 that performs heat dissipation of the battery cell 110. Here, the BMS 200 may be included in the battery pack 100. Here, the BMS 200 may be connected to a control center 400 outside the battery system 1 through communication.

The battery pack 100 may include at least one battery cell 110, a sensing unit 120 that collects status information of the battery cell 110, a cooling pipe 130 through which a coolant for heat dissipation of the battery cell 110 circulates and a cooling fan 140 for heat dissipation of the battery cell 110.

The battery cell 110 may store and supply energy through charging and discharging. The battery cell 110 may be provided in a pouch shape in which the number of stacks per unit area can be maximized. The battery cell 110 provided in a pouch shape may be manufactured by housing an electrode assembly including a positive electrode, a negative electrode and a separator in a case of a laminate sheet and then heat-sealing the edge of the case. However, it is obvious that the battery cell does not necessarily have to be provided in a pouch shape, and may be provided in prismatic, cylindrical, or other various shapes as long as the storage capacity required by the device to be mounted in the future is achieved.

A plurality of battery cells 110 may be included in the battery pack 100. The plurality of battery cells 110 may be stacked in one direction and mounted in the battery pack 100 in the state of a 'battery stack'. Furthermore, in order to improve the energy capacity of the battery pack 100, the battery pack 100 may include a plurality of battery stacks.

On the other hand, the battery cell 110 may be modularized and mounted to the battery pack 100. Here, modularization means that the battery cell 110 or the battery stack is provided in a sealed state in a separate case. When the battery cell 110 is provided in a sealed form by a separate case, such a battery stack may be referred to as a 'battery module', and the battery pack 100 may be described as including at least one battery module. Here, the battery module may individually include one or more of a sensing unit 120, a cooling pipe 130, and a cooling fan 140 in addition to the battery cell 110. When the battery stack is modularized and mounted to the battery pack 100, the battery module may each include a sensing unit 120, a cooling pipe 130, or a cooling fan 140, whereby the battery pack 100 may include a plurality of the sensing units 120, cooling pipes 130 or cooling fans 140.

On the other hand, unlike those set forth above, the battery cell 110 can be mounted in the battery pack 100 in a non-modularized state. The battery cell 110 can be mounted in the battery pack 100 in a state of not being stored in a separate case. Thereby, the structure of the battery pack 100 can be simplified, the internal space of the battery pack 100 can be efficiently utilized, and the number of battery cells 110 mounted in the internal space can be increased. The structure in which the non-modularized battery cells 110 are mounted in the battery pack 100 can be referred to as 'module-less', 'non-module', 'zero module', or 'CTP' (cell to pack). Furthermore, this type of battery pack 100 may not typically include a plurality of sensing units 120, cooling pipes 130, and cooling fans 140. However, this is not necessarily the case, and the battery pack 100 may also include a plurality of sensing units 120, cooling pipes 130, or cooling fans 140 as necessary.

The sensing unit 120 may serve to acquire status information of the battery cells 110. The sensing unit 120 may include a sensor that collects status information of the battery cell 110. The sensing value collected from the sensor included in the sensing unit 120 may be transmitted to the BMS 200.

The sensing unit 120 may include various sensors.

As an example, the sensing unit 120 may include a temperature sensor that collects a temperature value of the battery cell 110. The temperature sensor may be positioned adjacent to at least one battery cell 110, and may detect the temperature value of the battery cell 110. The temperature value of the battery cell 110 acquired by the temperature sensor may be interpreted as a temperature value representing the battery stack or the battery pack 100 by itself or through processing.

As another example, the sensing unit 120 may include a pressure sensor that collects a pressure value around the battery cell 110. Here, if the battery cell 110 is modularized, the pressure sensor may be located inside a case of the battery module, and may collect a pressure value inside the battery module. Furthermore, if the battery cell 110 is not modularized, the pressure sensor may be located inside a case of the battery pack 100, and may collect a pressure value inside the battery pack 100.

As yet another example, the sensing unit 120 may include a gas sensor. The gas sensor may analyze the surrounding air of the battery cell 110. The gas sensor may detect and quantify the presence or amount of a particular component contained in air. Furthermore, the gas sensor may also represent the amount of change in the chemical gas injected as an electrical signal. In this manner, the gas sensor of the sensing unit 120 may detect the hot gas in the battery module or the battery pack when it occurs .

As another example, the sensing unit 120 may include an illuminance sensor. The illuminance sensor may measure the brightness around the battery cell 110. The illuminance sensor may detect the presence/absence of light, the intensity of light or the like. In this manner, the illuminance sensor of the sensing unit 120 may detect the presence/absence of light caused by a fire when a fire occur in the battery module or the battery pack.

As another example, the sensing unit 120 may include a position sensor for acquiring position information of the battery pack 100. The position sensor may be a GPS sensor. The position sensor may include a GPS receiver or a GPS module.

On the other hand, the sensing unit 120 may be electrically connected to the battery cell 110, and may thereby obtain current and voltage information of the battery cell 110. The information collected by the sensing unit 120 may be used to confirm the state of the battery cell 110, such as overcharge or overdischarge.

The cooling pipe 130 may serve to prevent a temperature rise of the battery cell 110. The cooling pipe 130 may serve to perform heat dissipation of the battery cell 110. The inside of the cooling pipe 130 may be filled with a coolant 132. The cooling pipe 130 may provide a moving passage for the coolant 132. The cooling pipe 130 may serve to realize a liquid cooling method.

The coolant 132 is provided for heat dissipation of the battery cell 110, and may cool the battery cell 110 through vaporization or temperature increase. The coolant 132 may include a material having a high heat of vaporization or a high specific heat. The coolant 132 may include a material having insulating properties. The physical properties and types of the coolant 132 applicable to the present embodiment may widely vary. The coolant 132 of the present embodiment may be any known type as long as it can perform the heat dissipation function of the battery cell 110 and is movable inside the cooling pipe 130.

The cooling pipe 130 may be positioned adjacent to the battery cell 110. As shown in FIG. 2, the cooling pipe 130 may be designed to cross between two adjacent battery cells 110, and may simultaneously cool the two battery cells 110, thereby improving the cooling efficiency of the cooling pipe 130.

The end part of the cooling pipe 130 may be connected to a cooling device 300.

Here, the cooling device 300 may perform a function for managing the coolant 132. The cooling device 300 may include a circulation pump 320 for circulating the coolant 132 and a heat exchanger 330 for performing heat dissipation of the coolant 132. The cooling device 300 may have a space for housing the coolant 132 inside. The coolant 132 stored in the internal space may be circulated by being moved to the cooling pipe 310 via the circulation pump 320. The cooling device 300 may be positioned outside the battery pack 100.

The heat exchanger 330 included in the cooling device 300 may include a coolant fan. The coolant fan may control the temperature of the coolant 132 through rotation. The cooling level of the coolant 132 may vary according to the driving speed of the coolant fan. For example, the coolant fan may be driven at a first speed, and thus, the temperature of the coolant 132 may change by a first value. The coolant fan may be driven at a second speed and thus, the temperature of the coolant 132 may change by a second value. The second speed may be faster than the first speed, and the second value may be higher than the first value. Here, the coolant fan being driven at a first speed can be described as a first condition. The coolant fan being driven at a second speed can be described as a second condition.

Meanwhile, according to the embodiment, the heat exchanger 330 may also include a cooling device other than a coolant fan. In this case, the operation of the heat exchanger 330 that causes the temperature of the coolant 132 to change by a first value may be described as a first condition, and the operation of the heat exchanger 330 that causes the temperature of the coolant 132 to change by a second value may be described as a second condition.

The operation of the cooling device 300 can be controlled by a cooling control unit 310. The cooling control unit 310 can control the operation of the cooling device 300 based on a control signal received from the BMS 200. For example, when the charging/discharging operation of the battery pack 100 is started, the BMS 200 can request the cooling device 300 to drive the circulation pump 320, and the cooling control unit 310 can control the circulation pump 320 to start operation based on this. In another example, when overheating of the battery pack 100 is confirmed, the BMS 200 can request the cooling device 300 to control the operation of the heat exchange unit 330, and the cooling control unit 310 can control the operation of the heat exchange unit 330 based on this. In another example, if the outbreak of a fire in the battery pack 100 is confirmed, the BMS 200 may request the cooling device 300 to stop the operation of the heat exchange unit 330 and/or the circulation pump 320, and the cooling control unit 310 may control the operation of the heat exchange unit 330 and/or the circulation pump 320 based on this.

The cooling fan 140 may serve to prevent an increase in temperature of the battery cells 110. The cooling fan 140 may serve to perform heat dissipation of the battery cell 110. The cooling fan 140 may serve to achieve gas cooling.

The cooling fan 140 may be provided in the battery pack 100 or the battery module. The cooling fan 140 may be provided in the battery pack 100 or battery module case. The cooling fan 140 may serve to flow external air into the battery pack 100 or the battery module. The cooling fan 140 may serve to discharge internal air of the battery pack 100 or the battery module to the outside. The cooling fan 140 may be operated according to instructions of the BMS 200.

The BMS 200 can monitor the status of the battery cell 110. The BMS 200 can receive status information of the battery cell 110 collected from the sensing unit 120, and perform an overheat protection function or a fire management function of the battery cell 110 based on this. Furthermore, when the sensing unit 120 acquires voltage information or current information of the battery cell 110, it can also perform an overcharge protection function, an overdischarge protection function, an overcurrent protection function, an overvoltage protection function, a cell balancing function of the battery cell 110, or the like based on this.

Meanwhile, in FIG. 1, the BMS 200 is shown as being positioned inside the battery pack 100, but this is not necessarily the case, and the BMS 200 can manage the battery cells 110 of the battery pack 100 at the outside of the battery pack 100

The BMS 200 may include a control unit, and the control unit can confirm whether the battery cell 110 has overheated or a fire has occurred based on the status information of the battery cell 110 collected from the sensing unit 120. When the battery cell 110 overheats or a fire occurs, the control unit can request the battery pack 100 or the cooling device 300 to perform a particular operation for resolving them.

The BMS 200 may include a communication unit, and may receive information from the sensing unit 120 via wired or wireless communication. Furthermore, the BMS 200 may transmit a control signal for controlling the operation of the battery cell 110 to the battery pack 100, the cooling device 300, or other devices via the communication unit.

In a specific example, if the control unit determines that a fire has occurred in the battery cell 110, the BMS 200 may transmit a control signal to the battery pack 100 via the communication so as to stop the drive of the cooling fan 140 of the battery pack 100.

Meanwhile, depending on the design, the BMS 200 may include a master BMS and a slave BMS. For example, if the battery pack 100 includes at least one battery module, the battery pack 100 may be provided with a master BMS, and the battery module may be provided with a slave BMS. The slave BMS may transmit status information collected from the sensing unit 120 to the master BMS. Depending on the determination result based on the above-mentioned status information, the master BMS can transmit a control signal to the slave BMS so that the target device performs a particular operation, or can directly control the target device.

The BMS 200 may include a cooling management unit 210, a fire management unit 220, and a fire determination unit 230. However, this is intended to more specifically explain each function of the BMS 200, and the BMS 200 does not necessarily include a cooling management unit 210, a fire management unit 220, and a fire determination unit 230 which are physically separated. Therefore, depending on the operation of the control unit, communication unit, and other components included in the BMS 200, the functions of the cooling management unit 210, the fire management unit 220, and the fire determination unit 230 described below may be performed.

The cooling management unit 210 may manage the temperature of the battery cell 110. The cooling management unit 210 may receive temperature information of the battery cell 110 from the sensing unit 120. The cooling management unit 210 may control the operation of the cooling device 300 based on the temperature information of the battery cell 110. The cooling management unit 210 may transmit a control signal to the cooling device 300 so as to control the operation of the cooling device 300 for performing heat dissipation of the battery cell 110. More specifically, when the temperature of the battery cell 110 is equal to or higher than a reference value, the BMS 300 may transmit a control signal to the cooling device 300 so that the heat exchanger 330 of the cooling device 300 operates under a first condition or a second condition. Furthermore, if a fire occurs in the battery cell 110, the cooling management unit 210 can transmit a control signal to the cooling device 300 so that the heat exchanger 330 of the cooling device 300 stops operating. Here, the outbreak of a fire can be determined by the fire determination unit 330. Alternatively, the outbreak of a fire can also be determined directly by the cooling management unit 210.

The fire management unit 220 may serve to suppress a fire in the battery cell 110. The fire management unit 220 may control the operation of the cooling device 300 when a fire occurs in the battery cell 110. The fire management unit 220 may transmit a control signal to the cooling device 300 or the battery pack 100 so that the coolant is discharged from the cooling pipe 130 when a fire occurs in the battery cell 110. Furthermore, when a fire occurs in the battery cell 110, the fire management unit 220 may transmit the position information of the battery pack 100 to an external control center 400. Here, the position information of the battery pack 100 may be collected by the position sensor of the sensing unit 120. Here, the BMS 200 and the control center 400 may be connected via wireless communication. The control center 400 can transmit the received position information of the battery pack 100 to a medical institution or a firefighting agency.

The fire determination unit 230 may determine outbreak of a fire in the battery cell 110. The fire determination unit 230 may be included in the fire management unit 220. The fire determination unit 230 may receive status information of the battery cell 110 from the sensing unit 120. The fire determination unit 230 may determine outbreak of a fire based on the status information of the battery cell 110. The fire determination unit 230 may receive pressure information around the battery cell 110 acquired from the pressure sensor, and may confirm the pressure change inside the battery pack 100 or the battery module based on this information. Furthermore, when the sensing unit 120 includes an illuminance sensor and/or a gas sensor, the fire management unit 220 can confirm the presence/absence of light and/or the occurrence of a hot gas inside the battery pack 100 or the battery module, and can determine outbreak of a fire in the battery module or the battery pack 100 based on this information. When the fire determination unit 230 determines outbreak of a fire inside the battery module or the battery pack 100, the cooling management unit 210 and the fire management unit 220 can transmit a control signal to the battery pack 100 or the cooling device 300 based on this.

Next, a control method of a battery system according to another embodiment of the present disclosure will be described. The control method described below is performed by the above-mentioned battery system 1 and thus, the contents already mentioned will be omitted to avoid redundant description.

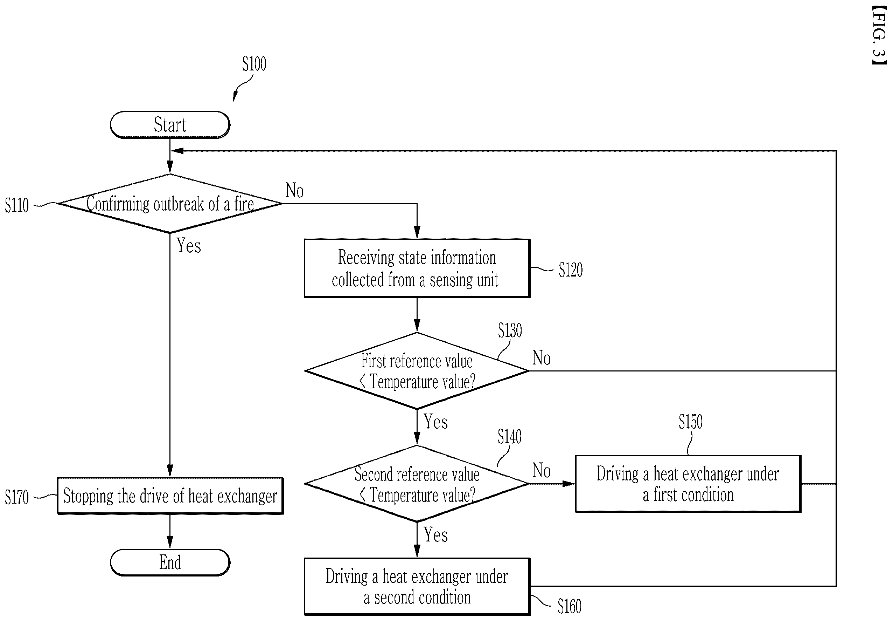

FIG. 3 is a flowchart showing a cooling control method of a battery system according to an embodiment of the present disclosure. The cooling control method according to FIG. 3 may be performed by the cooling management unit 210 of the above-mentioned battery system 1.

Referring to FIG. 3, the cooling control method (S100) of the battery system 1 according to the present embodiment may comprise:
a step (S110) of confirming outbreak of a fire in the battery pack 100, a step (S120) of receiving status information of the battery cell 110 collected from the sensing unit 120 if it is confirmed that no fire has occurred, a step (S130) of comparing the received temperature value with a first reference value, a step (S140) of comparing the received temperature value with a second reference value, a step of driving the heat exchanger 330 under a first condition if the received temperature value is higher than the first reference value and lower than or equal to the second reference value, a step of driving the heat exchanger 330 under a second condition if the received temperature value is higher than the second reference value, and a step (S170) of stopping the drive of the heat exchanger 330 if the fire outbreak is confirmed.

Here, as the determination result of step (S130), if the received temperature value is lower than the first reference value, the step (S110), step (S120), or step (S130) can be performed again. Furthermore, after step (S150) or step (S160) is performed, the step (S110), step (S120), or step (S130) can be performed again.

Each step is described in more detail below. Furthermore, for the convenience of explanation, the following steps are described as being performed by the cooling management unit 210.

The cooling management unit 210 can confirm outbreak of a fire in the battery pack 100 (S110). The outbreak of a fire in the battery pack 100 can be determined by the fire determination unit 230, and the cooling management unit 210 can receive the determination result of the fire determination unit 230. The cooling management unit 210 receives the determination result of the fire determination unit 230, and can determine outbreak of a fire in the battery pack 100 based on this. However, depending on the embodiments, the cooling management unit 210 can also directly determine outbreak of a fire.

The cooling management unit 210 may receive status information collected from the sensing unit 120 if it is confirmed that no fire has occurred inside the battery pack 100 (S120). Here, the status information may include a temperature value of the battery cell 110 or the battery pack 100. Meanwhile, in FIG. 3, step (S120) is shown as being performed after step (S110), but may also be performed before step (S110).

The cooling management unit 210 may compare the temperature value received from the sensing unit 120 with a first reference value (S130). The first reference value may be a temperature value of the battery cell 110 in the first heat generation state. The first reference value may be calculated following the experiment or theory, and may be higher than the temperature value of the battery cell 110 in the normal state.

Here, if the received temperature value is lower than the first reference value or equal to the first reference value, the cooling control method (S100) of the present embodiment may be performed again from step (S110), step (S120), or step (S130). This may be because, when the received temperature value is lower than or equal to the first reference value, the temperature rise of the battery pack 100 or the battery cell 110 is slight and cooling management is not required. This may serve to ensure that the cooling management unit 210 re-confirm whether cooling management of the battery pack 100 or the battery cell 110 is required.

The cooling management unit 210 can compare the temperature value received from the sensing unit 120 with a second reference value (S140). If the received temperature value is higher than the first reference value, the cooling management unit 210 can compare the temperature value received from the sensing unit 120 with a second reference value. The second reference value may be a temperature value of the battery cell 110 in the second heat generation state. The second reference value may be calculated following the experiment or theory, and may be higher than the first reference value.

If the received temperature value is higher than the first value and lower than the second value or equal to the second value, the cooling management unit 210 can control the heat exchanger 330 of the cooling device 300 so as to be driven under the first condition (S150). The cooling management unit 210 can transmit a control signal to the cooling device 300 via the communication unit, and the cooling control unit 310 can control the heat exchanger 330 so as to be driven under the first condition. Here, the first condition may be an operation of the heat exchanger 330 that causes the temperature of the coolant 132 to change by a first value. If the heat exchanger 330 includes a coolant fan, the first condition may mean that the coolant fan is driven at a first speed.

Here, the cooling management unit 210 can instruct the cooling fan 140 of the battery pack 100 to perform a specific operation if the received temperature value is higher than the first value and lower than the second value or equal to the second value. More specifically, the cooling management unit 210 can control the cooling fan 140 so as to be driven at a third speed, thereby promoting heat dissipation of the battery cell 110.

The cooling management unit 210 can control the heat exchanger 330 of the cooling device 300 so as to be driven under the second condition if the received temperature value is higher than the second value (S160). The cooling management unit 210 can transmit a control signal to the cooling device 300 via the communication unit, and the cooling control unit 310 can control the heat exchanger 330 so as to be driven under the second condition. Here, the second condition may be an operation of the heat exchanger 330 that causes the temperature of the coolant 132 to change by the second value. If the heat exchanger 330 includes a coolant fan, the second condition may mean that the coolant fan is driven at the second speed.

Here, the cooling management unit 210 may instruct the cooling fan 140 of the battery pack 100 to perform a specific operation if the received temperature value is higher than the second value. More specifically, the cooling management unit 210 may control the cooling fan 140 so that the cooling fan 140 can be driven at a fourth speed, thereby promoting heat dissipation of the battery cell 110. At this time, the fourth speed may be faster than the third speed.

Meanwhile, after step (S150) or step (S160), the cooling control method (S100) of the present embodiment may be performed again from step (S110), step (S120), or step (S130). This is to allow the cooling management unit 210 to reconfirm whether cooling management of the battery pack 100 or the battery cell 110 is needed.

The cooling management unit 210 can control the heat exchanger 330 to stop operation when the outbreak of a fire is confirmed (S170). The cooling management unit 210 can transmit a control signal to the cooling device 300 via the communication unit, and the cooling control unit 310 can control the heat exchanger 330 so that the heat exchanger 330 is stopped.

This may be because, when the outbreak of a fire is confirmed, the cooling management unit 210 determines to be a state in which cooling management of the battery pack 100 or battery cell 110 is not needed. Furthermore, as will be described below, when a fire occurs, the coolant of the cooling pipe 130 is sprayed into the battery pack 100, so that the operation of the heat exchanger 330 is no longer needed at the time of fire outbreak. Therefore, the cooling management unit 210 may request the cooling device 300 to stop the operation of the circulation pump 320 as well as the operation of the heat exchanger 330. The step (S170) may further include a step of controlling the cooling management unit 210 to stop the operation of the circulation pump 320 when the outbreak of a fire is confirmed.

Furthermore, since the drive of the cooling fan 140 at the time of fire outbreak can promote heat propagation by supplying oxygen to the fire position, the cooling management unit 210 can instruct the cooling fan 140 to stop operation. Therefore, the step (S170) can further include a step of controlling the cooling management unit 210 to stop the operation of the cooling fan 140 when the outbreak of a fire is confirmed.

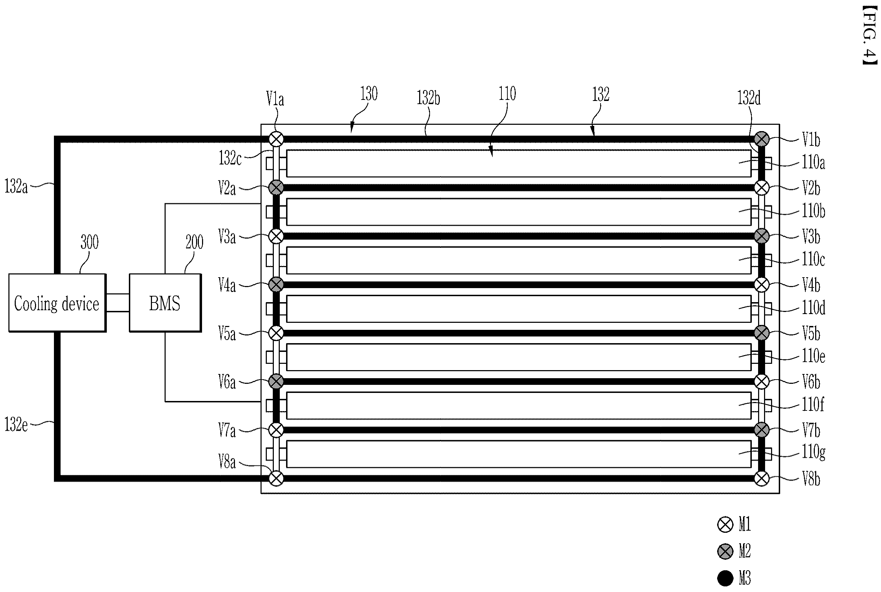

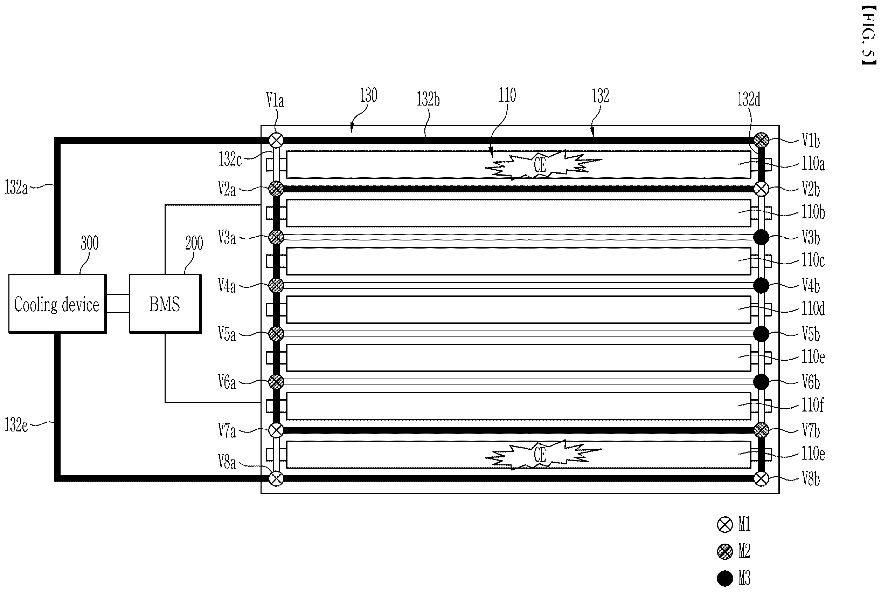

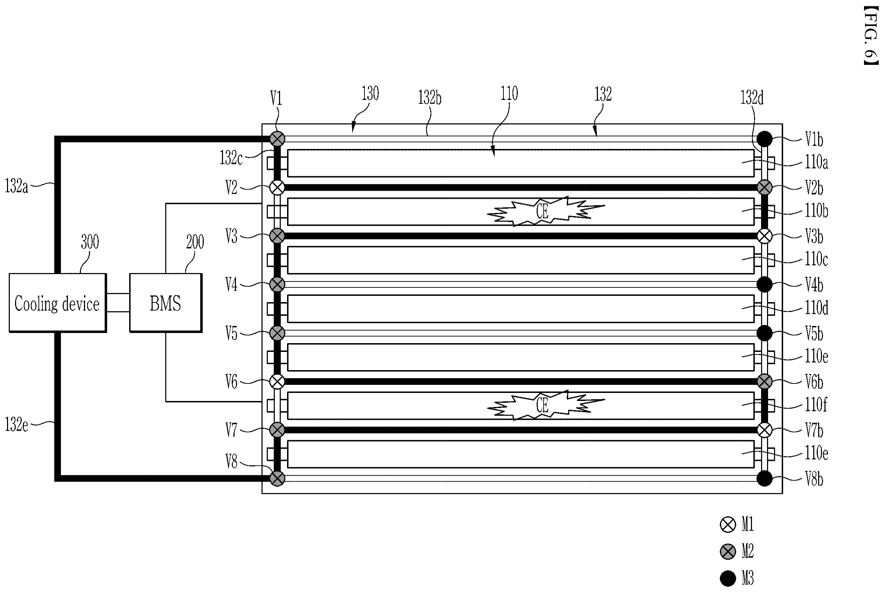

FIG. 4 is a diagram embodying a part of a battery system according to another embodiment of the present disclosure, which is a diagram showing a cooling device driven in a general cooling mode. FIGS. 5 and 6 are diagrams showing a cooling device driven in an intensive cooling mode in the battery system according to FIG. 4.

Referring to FIGS. 4 to 6, the battery system 1 of the present embodiment may include a cooling device 300 for heat dissipation of a plurality of battery cells 110 as in FIGS. 1 and 2, and most of the description may be identical to the contents set forth above. Hereinafter, the cooling device 300 will be mainly described.

Referring to FIG. 4, the battery system 1 of the present embodiment may include a cooling pipe 130 arranged so that the cooling liquid from the cooling device 300 passes around the plurality of battery cells 110. Furthermore, the cooling pipe 130 may include at least one valve unit V1a~V8a, V1b~V8b that control the movement path of the coolant 132 flowing through the cooling pipe 130.

In particular, the cooling pipe 130 may include a first coolant passage 132a, a second coolant passage 132b, a third coolant passage 132c, a fourth coolant passage 132d, and a fifth coolant passage 132e through which the coolant 132 flows, respectively. More specifically, the first coolant passage 132a may be a passage through which the coolant 132 flows in from the cooling device 300 toward the plurality of battery cells 110, and the fifth coolant passage 132e may be a passage through which the coolant 132 is discharged to the cooling device 300 via the plurality of battery cells 110. Furthermore, the second coolant passage 132b may extend in the longitudinal direction of the battery cell 110, and may be arranged between a pair of adjacent battery cells 110 among the plurality of battery cells 110 and on the outer surface of the outermost battery cells 110, respectively. Furthermore, the third coolant passage 132c and the fourth coolant passage 132 may extend along the thickness direction of the battery cells 110, and be disposed at both end parts of the plurality of battery cells 110.

In this case, as shown in FIG. 4, at least one valve unit V1a~V8a, V1b~V8b may be respectively arranged at a portion where the first coolant passage 132a, the second coolant passage 132b, the third coolant passage 132c, the fourth coolant passage 132d and the fifth coolant passage 132e intersect each other, and at least one valve unit V1a~V8a, V1b~V8b may adjust the flow direction of the coolant 132 flowing in the cooling pipe 130. However, the position and/or number of the valve units V1a~V8a, V1b~V8b are not limited thereto, and can be included in this embodiment as long as they are the position and number that can appropriately adjust the flow of the coolant 132 flowing in the cooling pipe 130.

In addition, a coolant temperature sensor capable of measuring the temperature of the coolant 132 flowing through the cooling pipe 130 may be arranged inside at least one valve unit V1a~V8a, V1b~V8b. Furthermore, the status information collected from the coolant temperature sensor may include temperature values of the plurality of battery cells 110. More specifically, the coolant temperature sensor may detect the temperature values of the plurality of battery cells 110 based on the measured temperature of the coolant 132.

Thereby, in the battery system 1 according to the present embodiment, the valve units V1a~V8a, V1b~V8b can measure the temperature of the coolant 132 according to the position arranged in the cooling pipe 130, so that the section-by-section temperature of the coolant 132 can be periodically measured, and the temperature of the battery cell 110 that has been heated to a specific temperature or higher inside the battery pack 100 can be easily detected.

More specifically, the valve units V1a~V8a, V1b~V8b can be driven in one of a first mode M1, a second mode M2, and a third mode M3. Here, the first mode M1 can cause the coolant 132 to flow along the longitudinal direction of the battery cell 110, the second mode M2 can cause the coolant 132 to flow along the thickness direction of the battery cell 110, and the third mode M3 can be a state in which driving is stopped.

Furthermore, if the temperature values of the plurality of battery cells 110 are lower than a third reference value, the cooling device 300 can be driven in a general cooling mode in which the coolant 132 flowing through the cooling pipe 130 cools the whole battery cell 110. Furthermore, if there is a battery cell 110 among the plurality of battery cells 110 whose temperature value is higher than the third reference value, the cooling device 300 can be driven in an intensive cooling mode in which the coolant 132 flowing through the cooling pipe 130 cools only the battery cell 110 having a temperature value higher than the third reference value.

Here, the third reference value may be the temperature value of the abnormal battery cell 110 in which a cell event CE has occurred. The third reference value may be calculated following the experiment or theory, and may be higher than the temperature value of the battery cell 110 in a steady state.

Here, a cell event CE is an emergency situation that occurs in at least one battery cell among the plurality of battery cells 110 included in a battery pack 100, which includes liquid leakage of a battery cell or battery pack, mechanical damage to a battery cell, and occurrence of a thermal event that ignites due to a temperature rise. In particular, a thermal event includes the occurrence of flames and/or venting gases as a battery cell ignites. A thermal event can spread to other battery cells 110 included in the battery pack 100, thereby increasing the temperature of the battery cells 110 in the surrounding battery module or battery pack 100, which may pose a risk of cascading additional cell events.

More specifically, in the battery system 1 according to FIG. 4, the cooling device 300 can cool the plurality of battery cells 110 in a general cooling mode. Here, the general cooling mode can be a mode in which the coolant 132 passes through the whole periphery of respective battery cells 110 in the plurality of battery cells 110 to evenly cool the plurality of battery cells 110.

As an example, as shown in FIG. 4, in the battery system 1 according to FIG. 4, a 1a valve unit V1a, a 2b valve unit V2b, a 3a valve unit V3a, a 4b valve unit V4b, a 5a valve unit V5a, a 6b valve unit V6b, a 7a valve unit V7a, an 8a valve unit V8a, and an 8b valve unit V8b can be driven in a first mode M1. Furthermore, a 1b valve unit V1b, a 2a valve unit V2a, a 3b valve unit V3b, a 4a valve unit V4a, a 5b valve unit V5b, a 6a valve unit V6a, and a 7b valve unit V7b can be driven in a second mode M2.

At this time, the coolant 132 that has been flowed into the battery pack 100 via the first coolant passage 132a can move in a zigzag pattern between the plurality of battery cells 110 along the second coolant passage 132b → the third coolant passage 132c → the second coolant passage 132b → the fourth coolant passage 132d → the second coolant passage 132b, thereby evenly cooling the plurality of battery cells 110.

Furthermore, in the battery system 1 according to FIGS. 5 and 6, the cooling device 300 can cool a plurality of battery cells 110 in an intensive cooling mode. Here, the intensive cooling mode can be a mode in which the coolant 132 moves around an abnormal battery cell in which a cell event CE has occurred among the plurality of battery cells 110 to intensively cool the abnormal battery cell.

More specifically, in the battery system 1 according to the present embodiment, the valve units V1a~V8a, V1b~V8b measure the temperature of the coolant 132 according to their positions in the cooling pipe 130, and thus can quickly detect the position of an abnormal battery cell in which a cell event CE has occurred, and the intensive cooling mode can be driven for the detected abnormal battery cell.

As shown in FIG. 5, in the battery system 1 according to FIG. 5, the plurality of battery cells 110 may include a first battery cell 110a, a second battery cell 110b, a third battery cell 110c, a fourth battery cell 110d, a fifth battery cell 110e, a sixth battery cell 110f, and a seventh battery cell 110g. Here, the number of battery cells included in the plurality of battery cells 110 is not limited thereto, and may be arranged in an appropriately increased or decreased number as needed.

As an example, in the battery system 1 according to FIG. 5, the first battery cell 110a and the seventh battery cell 110g among the plurality of battery cells 110 may be abnormal battery cells in which a cell event CE has occurred. At this time, unlike FIG. 4, the 1a valve unit V1a, the 2b valve unit V2b, the 7a valve unit V7a, the 8a valve unit V8a, and the 8b valve unit V8b can be driven in a first mode M1. Furthermore, the 1b valve unit V1b, the 2a valve unit V2a, the 3a valve unit V3a, the 4a valve unit V4a, the 5a valve unit V5a, the 6a valve unit V6a, and the 7b valve unit V7b can be driven in a second mode M2. Furthermore, the 3b valve unit V3b, the 4b valve unit V4b, the 5b valve unit V5b, and the 6b valve unit V6b can be driven in a third mode M3.

At this time, the coolant 132 that has been flowed into the battery pack 100 through the first coolant passage 132a can move along the second coolant passage 132b → the third coolant passage 132c → the second coolant passage 132b → the fourth coolant passage 132d → the second coolant passage 132b located around the first battery cell 110a and the seventh battery cell 110g, thereby intensively cooling only the first battery cell 110a and the seventh battery cell 110g.

As an example, in the battery system 1 according to FIG. 6, the second battery cell 110b and the sixth battery cell 110f among the plurality of battery cells 110 are abnormal battery cells in which a cell event CE has occurred. At this time, unlike FIG. 4, the 2a valve unit V2a, the 3a valve unit V3a, the 3b valve unit V3b, the 6a valve unit V6a, and the 7b valve unit V7b can be driven in a first mode M1. Furthermore, the 1a valve unit V1a, the 2b valve unit V2b, the 3a valve unit V3a, the 4a valve unit V4a, the 5a valve unit V5a, the 6b valve unit V6b, the 7a valve unit V7a, and the 8a valve unit V8a can be driven in a second mode M2. Furthermore, the 1b valve section V1b, the 4b valve section V4b, the 5b valve section V5b, and the 8b valve section V8b can be driven in a third mode M3.

At this time, the coolant 132 that has been flowed into the battery pack 100 through the first coolant passage 132a can move along the second coolant passage 132b → the third coolant passage 132c → the second coolant passage 132b → the fourth coolant passage 132d → the second coolant passage 132b located around the second battery cell 110b and the sixth battery cell 110f, thereby intensively cooling only the second battery cell 110b and the sixth battery cell 110f.

In this way, as shown in FIGS. 5 and 6, in the battery system 1 according to the present embodiment, if an abnormal battery cell is confirmed among the plurality of battery cells 110 arranged inside the battery pack 100, the intensive cooling mode can intensively cool the abnormal battery cell. However, the position and cooling path of the abnormal battery cell are not limited only to those shown in FIGS. 5 and 6, and can be similarly described in the case where other battery cells are confirmed as abnormal battery cells.

Thereby, the battery system 1 according to the present embodiment can intensively cool an abnormal battery cell where a cell event CE has occurred, thereby minimizing the temperature rise of the battery cells and suppressing the outbreak of a fire early to minimize additional damage.

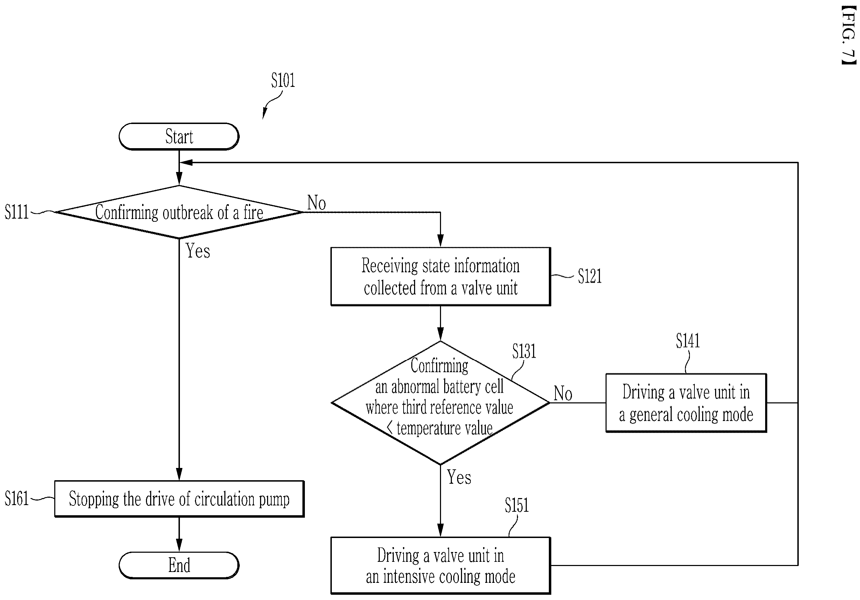

FIG. 7 is a flowchart showing a cooling control method driven in a general cooling mode or an intensive cooling mode in the battery system according to FIGS. 4 to 7.

FIG. 7 is a flowchart showing a cooling control method of a battery system according to FIGS. 4 to 7. The cooling control method according to FIG. 7 may be performed by the cooling management unit 210 of the battery system 1 described above.

Referring to FIG. 7, the cooling control method S101 of the battery system 1 according to the present embodiment may comprise: a step (S111) of confirming outbreak of a fire in the battery pack 100, a step (S121) of receiving status information of the battery cell 110 collected from the valve units V1a~V8a, V1b~V8b if it is confirmed that no fire has occurred, a step (S131) of comparing the received temperature value with a third reference value, a step (S141) of driving the valve units V1a~V8a, V1b~V8b in a general cooling mode if the received temperature value is not higher than the third reference value, a step (S151) of driving the valve units V1a~V8a, V1b~V8b in an intensive cooling mode if the received temperature value is higher than the third reference value, and a step (S161) of stopping the drive of the circulation pump 320 if a fire has occurred.

Each step will be described in more detail below, and the contents that overlap with the cooling control method (S100) of the battery system 1 described in FIG. 3 will be omitted. Furthermore, for convenience of explanation, each step below will be described as being performed by the cooling management unit 210.

The cooling management unit 210 can receive status information collected from the valve units V1a~V8a, V1b~V8b if it is confirmed that no fire has occurred inside the battery pack 100 (S120). That is, the status information herein can be acquired from the coolant temperature sensors respectively arranged inside the valve units V1a~V8a, V1b~V8b, and can include the temperature value of the battery cell 110 or the battery pack 100 measured based on the temperature value of the coolant 132 flowing through the cooling pipe 130. Meanwhile, in FIG. 7, the step (S121) is shown as being performed after the step (S111), but it can also be performed before the step (S111).

The cooling management unit 210 can compare the temperature values received from the valve units V1a~V8a, V1b~V8b with the third reference value (S130).

The cooling management unit 210 can control the valve units V1a~V8a, V1b~V8b to be driven in the general cooling mode if the received temperature value is not higher than the third reference value (S141). The cooling management unit 210 can transmit a control signal to the cooling device 300 via the communication unit, and the cooling control unit 310 can control the valve units V1a~V8a, V1b~V8b to be driven in the general cooling mode.

The cooling management unit 210 can control the valve units V1a~V8a, V1b~V8b to be driven in the intensive cooling mode if the received temperature value is higher than the third reference value (S151). The cooling management unit 210 can transmit a control signal to the cooling device 300 via the communication unit, and the cooling control unit 310 can control the valve units V1a~V8a, V1b~V8b to be driven in an intensive cooling mode.

The cooling management unit 210 can control the circulation pump 320 to stop operation if the outbreak of a fire is confirmed (S161). The cooling management unit 210 can transmit a control signal to the cooling device 300 via the communication unit, and the cooling control unit 310 can control the heat exchanger 330 so that the circulation pump 320 is stopped.

This may be because, when the outbreak of a fire is confirmed, the cooling management unit 210 determines to be a state in which cooling management of the battery pack 100 or the battery cells 110 is not needed. Furthermore, as will be described below, at the time of outbreak of a fire, the coolant of the cooling pipe 130 is sprayed into the inside of the battery pack 100, so that the operation of the circulation pump 320 is no longer needed when a fire occurs.

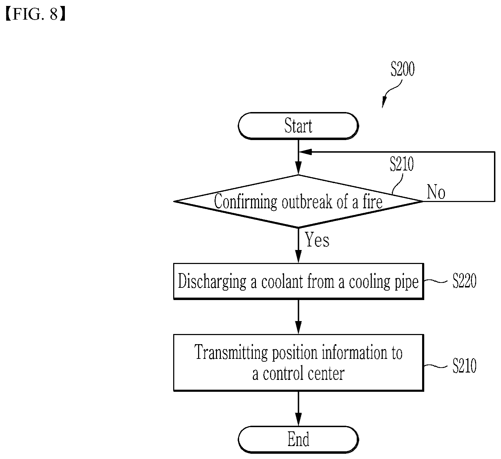

FIG. 8 is a flowchart showing a fire control method of a battery system according to an embodiment of the present disclosure. The fire control method according to FIG. 8 may be performed by the fire management unit 220 of the battery system 1 described above.

Referring to FIG. 8, the fire control method (S200) of the battery system 1 according to the present embodiment may comprise:
a step (S210) of confirming outbreak of a fire in the battery pack 100, a step (S220) of discharging a coolant 132 from a cooling pipe 130 if a fire has occurred, and a step (S230) of transmitting the position information of the battery pack 100 to the control center 400.

Here, as a result of the determination of step (S210), if the outbreak of a fire is not confirmed, step (S210) may be performed again.

Each step will be described in more detail below. Furthermore, for the convenience of explanation, each step below will be described as being performed by the fire management unit 220.

The fire management unit 220 can confirm outbreak of a fire in the battery pack 100 (S210). The outbreak of a fire in the battery pack 100 can be determined by the fire determination unit 230, and the fire management unit 220 can receive the determination result of the fire determination unit 230. The fire management unit 220 receives the determination result of the fire determination unit 230, and thus can determine outbreak of a fire in the battery pack 100 based on this. However, according to the embodiments, the fire management unit 220 can include the fire determination unit 230, or the fire management unit 220 can directly determine outbreak of a fire.

When the outbreak of a fire is confirmed inside the battery pack 100, the fire management unit 220 controls the cooling pipe 130 to discharge the cooling liquid (S220). The fire management unit 220 can transmit a control signal to the cooling device 300 via the communication unit, and the cooling control unit 310 can control the cooling pipe 130 to discharge coolant from the cooling pipe 130. For this purpose, the cooling pipe 130 can further include a configuration that partially cuts the cooling pipe 130. Alternatively, depending on the design, a configuration that cuts the cooling pipe 130 can be included in the battery pack 100. In this case, the fire management unit 220 can transmit a control signal to the battery pack 100 so that the corresponding configuration of the battery pack 100 operates.

On the other hand, according to the embodiments, when the cooling pipe 130 is provided with a structure that breaks by itself at a specific pressure or temperature or higher, the step (220) may be omitted.

The fire management unit 220 can transmit position information of the battery pack 100 to the control center 400 if the outbreak of a fire inside the battery pack 100 is confirmed (S230). The position information of the battery pack 100 can be acquired by the position sensor of the sensing unit 120. Therefore, the fire control method (S200) of the present embodiment may further include a step of receiving position information of the battery pack 100 collected from the sensing unit 120 before step (230). The step of receiving position information may be performed before step (S220) or before step (S210).

In this way, the fire management unit 220 transmits the position information of the battery pack 100 to the control center 400, thereby making it possible to prevent secondary and tertiary fires caused by a fire in the battery pack 100. Specifically, when the battery system 1 of the present embodiment is mounted on a vehicle or an energy storage device, the outbreak of a fire and its position are transmitted to the control center 400, so that a medical emergency center and a firefighting center can quickly confirm the outbreak of a fire.

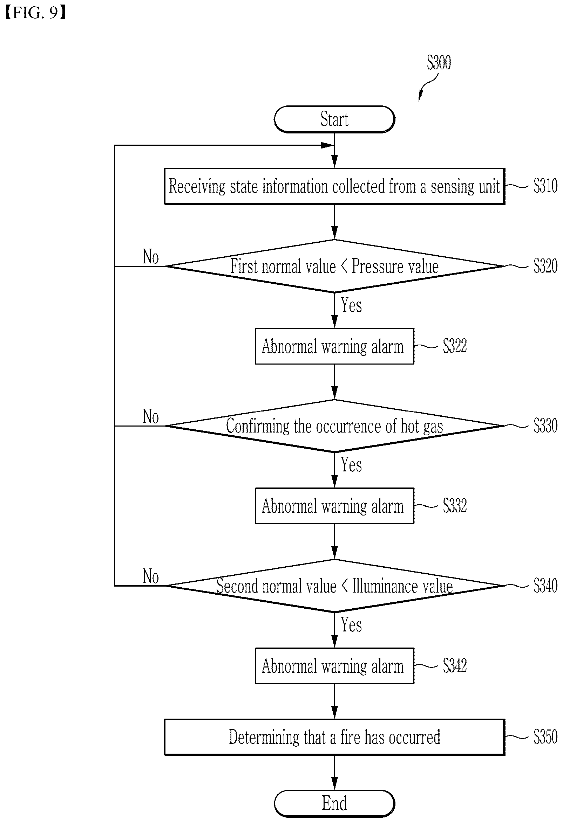

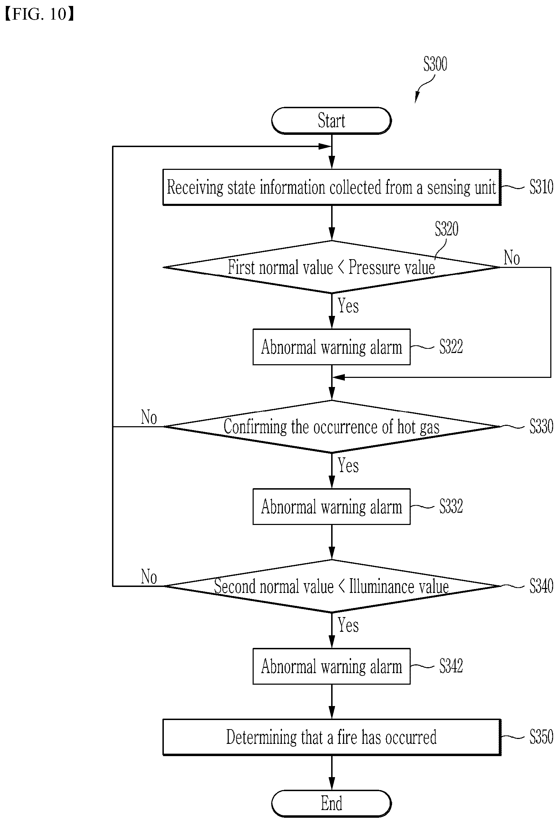

FIG. 9 is a flowchart showing a method for determining the outbreak of a fire in a battery system according to an embodiment of the present disclosure. FIG. 10 is another flowchart showing a method for determining the outbreak of a fire in a battery system according to an embodiment of the present disclosure. The determination of the outbreak of a fire according to FIGS. 9 and 10 may be performed by the fire determination unit 230 of the battery system 1 described above.

Referring to FIG. 9, the method (S300) for determining the outbreak of a fire in the battery system 1 according to the present embodiment may comprise:
a step (S310) of receiving status information of a battery cell 110 collected from a sensing unit 120, a step (S320) of comparing a pressure value received from a sensing unit 120 with a first normal value, a step (S330) of confirming the occurrence of a hot gas based on the value received from the sensing unit 120, a step (S340) of comparing an illuminance value received from the sensing unit 120 with a second normal value, and a step (S350) of determining that a fire has occurred if the occurrence of a hot gas is confirmed based on values collected from the sensing unit 120 and the received illuminance value is higher than the second normal value.

Here, depending on the results of steps (S320), (S330), and (S340), the method (S300) for determining the outbreak of a fire according to the present embodiment may be performed again from step (S310) or step (S320).

The fire determination unit 230 may receive status information collected from the sensing unit 120 (S310). Here, the status information may include a temperature value, a pressure value, an illuminance value, an air composition, and the like inside the battery pack 100 or the battery module.

The fire determination unit 230 compares the pressure value received from the sensing unit 120 with a first normal value (S320). The first normal value may be an ambient pressure value of the battery cell 110 in a state where no fire or excessive heat has occurred. The first normal value may be an internal pressure value of the battery pack 100 or the battery module in a state where no fire or excessive heat has occurred. The first normal value may be calculated following the experiment or theory.

The fire determination unit 230 can output an abnormal warning alarm to the user if the received pressure value is higher than the first normal value (S322). The BMS 200 can be connected to the user device via wireless or wired communication, and the BMS 200 can transmit a control signal to the user device, thereby causing the user device to output an abnormality warning alarm.

The fire determination unit 230 can confirm the occurrence of a hot gas based on the measured value obtained from the gas sensor (S330). The fire determination unit 320 can confirm whether a specific component is included in the air, whether a specific component is included above a predetermined value, or the amount of change in a specific component, based on the information collected from the gas sensor, and can determine the occurrence of a hot gas based on this.

The fire determination unit 230 can output an abnormal warning alarm to the user if it is confirmed that a hot gas is occurred (S332).

The fire determination unit 230 can compare the illuminance value received from the sensing unit 120 with the second normal value (S340). The second normal value may be an ambient illuminance value of the battery cell 110 in a state where no fire or excessive heat has occurred. The second normal value may be an internal illuminance value of the battery pack 100 or the battery module in a state where no fire or excessive heat has occurred. The second normal value may be calculated following the experiment or theory.

The fire determination unit 230 can output an abnormal warning alarm to the user if the received illuminance value is higher than the second normal value (S342).

The fire determination unit 230 can determine that a fire has occurred in the battery cell 110 if the received pressure value is higher than the first normal value, a heating gas is generated, and the received illuminance value is higher than the second normal value (S350).

Meanwhile, the fire determination unit 230 may use the received temperature value at the time of determining the outbreak of a fire. In a specific example, the fire determination unit 230 may compare the received temperature value with a third reference value. The fire determination unit 230 may output an abnormal warning alarm to the user if the received temperature value is higher than the third reference value. Here, the third reference value may be an ambient temperature value of the battery cell 110 in a state where a fire has occurred. The third reference value may be calculated following the experiment or theory. Therefore, the method (S300) for determining the outbreak of a fire according to the present embodiment may further include a step in which the fire determination unit 230 compares the received temperature value with the third reference value. Here, if the received temperature value is lower than the third reference value or equal to the third reference value, the method S300 for determining the outbreak of a fire may be performed again from step (S310).

Here, the fire determination unit 230 of step (S350) can determine that a fire has occurred in the battery cell 110 if the received temperature value is higher than the third reference value, the received pressure value is higher than the first normal value, a hot gas is generated, and the received illuminance value is higher than the second normal value.

On the other hand, in FIG. 9, the fire determination unit 320 is described as comparing the pressure value, air composition, and illuminance value in that order, but this is not necessarily the case, and the fire determination unit 320 can compare them simultaneously. Alternatively, the fire determination unit 320 may compare the air composition or illuminance value before the pressure value.

In addition, if the pressure value, air composition, and illuminance value are compared simultaneously or independently, an alarm can be generated according to the air composition or illuminance value regardless of the result of the comparison of the pressure value. Furthermore, an alarm may be generated based on the pressure value or illuminance value regardless of the comparison result of the air composition, and an alarm may be generated based on the pressure value or air composition result value regardless of the comparison result of the illuminance value.

Meanwhile, as shown in FIG. 9, the fire determination unit 230 was described above as determining the outbreak of a fire based on three conditions: pressure, hot gas, and illuminance. However, according to the embodiments, the outbreak of a fire may be determined based on one or two of these conditions.

For example, the outbreak of a fire can be determined based on the step (S320) of comparing the pressure value around the battery cell 110. The fire determination unit 230 can determine that a fire has occurred if the received pressure value is higher than the first normal value. Here, the fire determination unit 230 can further use the received temperature value to determine the outbreak of a fire. The fire determination unit 230 can compare the received temperature value with the third reference value. The fire determination unit 230 can determine that a fire has occurred if the received temperature value is higher than the third reference value and the received pressure value is higher than the first normal value. Furthermore, in this case, if the sensing unit 120 includes a gas sensor or an illuminance sensor, the fire determination unit 230 can further use the sensing value of the gas sensor or the illuminance sensor to determine the outbreak of a fire.

In another example, if the sensing unit 120 includes only one of a gas sensor or an illuminance sensor according to an embodiment, the outbreak of a fire may be determined only by step (S330) or step (S340). Here, although not specifically shown in the figure, The fire determination unit (230) can also further use a temperature value.

In yet another example, as shown in FIG. 10, the outbreak of a fire may be determined based on the illuminance value or the presence/absence of a hot gas of the battery module or the battery pack 100. This may be because the pressure value around the battery cell 110 changes in the event of a fire, but the increased pressure value may quickly decrease when the case of the battery pack 100 or the battery module is opened, thereby making it difficult to detect the change in the pressure value. In this way, since the change in the pressure value is temporary, it may be more appropriate to determine the outbreak of a fire based on the illuminance value and/or the presence/ absence of gas generation, even if there is no change in the pressure value.

Therefore, the fire determination unit 230 can determine that a fire has occurred if the received illuminance value is higher than the second normal value and it is confirmed that a hot gas has occurred. Here, the fire determination unit 230 can further use the received temperature value to determine the outbreak of a fire. The fire determination unit 230 can compare the received temperature value with the third reference value. The fire determination unit 230 can determine that a fire has occurred if the received temperature value is higher than the third reference value, the received illuminance value is higher than the second normal value, and it is confirmed that a hot gas has occurred.

Meanwhile, in FIG. 10, the method (S300) for determining the outbreak of a fire according to the present embodiment is shown as including a step (S320) of comparing the pressure value with the first normal value, but as described above, if the step is not considered in determining the outbreak of a fire, it may be omitted.

Although the invention has been described in detail above with reference to limited embodiments and drawings, it will be appreciated by those skilled in the art that the scope of the present disclosure is not limited thereto, and various modifications and changes can be made to the invention without departing from the principles and sprit of the invention, the scope of which is defined in the appended claims and their equivalents.

### [Description of Reference Numerals]

1: battery system
100: battery pack
110: battery cell
120: sensing unit
130: cooling pipe
140: cooling fan
200: BMS
300: cooling device

## Claims

1. A battery system comprising:
a battery cell that stores and supplies energy through charging and discharging,
a sensing unit that collects status information of the battery cell,
a cooling device that performs heat dissipation of the battery cell, and
a BMS that controls the operation of the cooling device based on the status information collected from the sensing unit,
wherein the cooling device includes a coolant for cooling the battery cell and a heat exchange unit for cooling the coolant, and
wherein if it is determined that a fire has occurred in the battery cell, the heat exchange unit operates under a first condition or a second condition based on the status information.

2. The battery system according to claim 1, wherein:
the sensing unit includes a temperature sensor, and the status information collected from the sensing unit includes a temperature value of the battery cell,
wherein if the temperature value is higher than a first reference value, and is lower than a second reference value or equal to the second reference value, the heat exchange unit operates under a first condition,
if the temperature value is higher than a second reference value, the heat exchange unit operates under a second condition, and
the second reference value is higher than the first reference value.

3. The battery system according to claim 1, wherein:
the heat exchange unit includes a coolant fan that adjusts the temperature of the coolant through rotation,
the first condition is that the coolant fan is driven at a first speed,
the second condition is that the coolant fan is driven at a second speed, and
the second speed is faster than the first speed.

4. The battery system according to claim 1, wherein:
if it is determined that a fire has occurred in the battery cell, the operation of the heat exchange unit is stopped.

5. The battery system according to claim 1, wherein:
the coolant is circulated in a cooling pipe positioned adjacent to the battery cell, and
if it is determined that a fire has occurred in the battery cell, the coolant is discharged from the cooling pipe toward the battery cell.

6. The battery system according to claim 1, wherein:
if it is determined that a fire has occurred in the battery cell,
the position information of the battery cell is transmitted to an external control center.

7. The battery system according to claim 1, wherein:
the fire outbreak of the battery cell is determined based on status information collected by the sensing unit, and
the sensing unit includes at least one of a pressure sensor, an illuminance sensor, and a gas sensor.

8. The battery system according to claim 1, wherein:
the battery system includes a plurality of battery cells,
the coolant is circulated in a cooling pipe positioned adjacent to the plurality of battery cells,
the cooling pipe includes at least one valve unit that adjusts the moving path of the coolant flowing through the cooling pipe, and
a coolant temperature sensor is arranged inside each of the at least one valve unit.

9. The battery system according to claim 8, wherein:
the status information collected from the coolant temperature sensor includes temperature values of the plurality of battery cells,
if the temperature values of the plurality of battery cells are lower than a third reference value, the cooling device is driven in a general cooling mode in which the coolant flowing through the cooling pipe cools the whole battery cell, and
if there is a battery cell among the plurality of battery cells whose temperature value is higher than a third reference value, the cooling device is driven in an intensive cooling mode in which the coolant flowing through the cooling pipe cools only the battery cell having a temperature value higher than the third reference value.

10. A control method of a battery system comprising: a battery cell that stores and supplies energy through charging and discharging, a sensing unit that collects status information of the battery cell, a cooling device that performs heat dissipation of the battery cell, and a BMS that controls the operation of the cooling device based on the status information collected from the sensing unit, wherein the cooling device includes a coolant for cooling the battery cell and a heat exchange unit for cooling the coolant, the method comprising the steps of:
determining outbreak of a fire by the BMS based on the status information collected from the sensing unit, and
operating the heat exchange unit of the cooling device under a first condition or a second condition based on the status information collected from the sensing unit, if it is determined that no fire has occurred.

11. The control method of a battery system according to claim 10, wherein:
the status information collected from the sensing unit includes a temperature value of the battery cell, and
the operating step comprises,
comparing the temperature value collected from the sensing unit with a first reference value and a second reference value,
comparing the temperature value with the second reference value if the temperature value is higher than the first reference value, and
operating the heat exchanger of the cooling device under a second condition if the temperature value is higher than the second reference value, and operating the heat exchanger of the cooling device under a first condition if it is not so,
wherein the second reference value is higher than the first reference value.

12. The control method of a battery system according to claim 10, wherein:
the heat exchange unit comprises a coolant fan that adjusts the temperature of the coolant through rotation,
the first condition is that the coolant fan is driven at a first speed,
the second condition is that the coolant fan is driven at a second speed, and
the second speed is faster than the first speed.

13. The control method of a battery system according to claim 10,
further comprising stopping the heat exchanger of the cooling device if it is determined that a fire has occurred.

14. The control method of a battery system according to claim 10, wherein:
the coolant is circulated in a cooling pipe positioned adjacent to the battery cell, and
the method further comprises discharging the coolant from the cooling pipe if it is determined that a fire has occurred.

15. The control method of a battery system according to claim 10,
further comprising transmitting the position information of the battery cell to an external control center by the BMS if it is determined that a fire has occurred.

16. The control method of a battery system according to claim 10, wherein:
the outbreak of a fire is determined based on the status information collected by the sensing unit, and
the status information includes at least one of a pressure value around the battery cell, an illuminance value, and the occurrence of a hot gas according to the air composition.

17. The control method of a battery system according to claim 16, wherein:
the outbreak of a fire is determined based on the occurrence of a hot gas.

18. The control method of a battery system according to claim 16, wherein:
the outbreak of a fire is determined based on the illuminance value and the occurrence of a hot gas.

19. The control method of a battery system according to claim 16, wherein:
the status information further comprises a temperature value of the battery cell, and
the outbreak of a fire is determined based on the temperature value and the pressure value.
